# EUROPÄISCHE PATENTSCHRIFT

(11) **EP 4 441 399 B1**
(45) Veröffentlichungstag und Bekanntmachung des Hinweises auf die Patenterteilung: **06.05.2026**
(21) Anmeldenummer: 22823500.8
(22) Anmeldetag: 30.11.2022
(51) Int. Cl.: F16H 63/34, F16H 63/38, F16H 63/36

(54) **SPERRMECHANISMUS, ELEKTROMOTOR-ANTRIEBSEINHEIT, FAHRZEUG UND VERFAHREN ZUM SPERREN EINER WELLE EINES ANTRIEBSSTRANGS**
BLOCKING MECHANISM, ELECTRIC MOTOR DRIVE UNIT, VEHICLE, AND METHOD FOR BLOCKING A SHAFT OF A DRIVETRAIN
MÉCANISME DE BLOCAGE, UNITÉ D'ENTRAÎNEMENT DE MOTEUR ÉLECTRIQUE, VÉHICULE ET PROCÉDÉ DE BLOCAGE D'UN ARBRE D'UNE CHAÎNE CINÉMATIQUE

(30) Priorität: 02.12.2021 DE 102021213739
(43) Veröffentlichungstag der Anmeldung: 09.10.2024
(73) Patentinhaber: Schaeffler Technologies AG & Co. KG, 91074 Herzogenaurach (DE)
(72) Erfinder: HEEGER, Christof, 80687 München (DE); FRITSCH, Karl Martin, 80687 München (DE)
(74) Vertreter: Schaeffler Technologies
(86) Internationale Anmeldenummer: PCT/EP2022/083900
(87) Internationale Veröffentlichungsnummer: WO 2023/099587

(56) Entgegenhaltungen:
- CN-A- 112 922 980
- KR-B1- 101 462 805
- KR-B1- 101 462 805
- US-A1- 2018 105 149

## Beschreibung

Die Erfindung betrifft einen Sperrmechanismus, eine Elektromotor-Antriebseinheit, ein Fahrzeug sowie ein Verfahren zum Sperren einer Welle eines Antriebsstrangs.

Aus den Druckschriften CN 112922980 A und US 2018105149 A1 ist jeweils ein Sperrmechanismus zwischen einem Sperraktuator und einer sperrbaren Welle eines Antriebsstrangs bekannt.

Eine der Erfindung zugrunde liegende Aufgabe ist es, einen verbesserten Sperrmechanismus, insbesondere für ein Fahrzeug, bereitzustellen.

Diese Aufgabe wird durch einen gemäß Anspruch 1 vorgeschlagenen und unter Schutz gestellten Sperrmechanismus gelöst.

Es wird ein Sperrmechanismus, insbesondere für ein Fahrzeug bzw. eine Parksperre eines Fahrzeugs, vorgeschlagen, welcher einen Sperraktuator und eine sperrbare Welle eines Antriebsstrangs aufweist und zwischen dem Sperraktuator und der sperrbaren Welle angeordnet ist.

Dabei wird ein in einer Axial-Hubbewegung und längs zur Welle elektrisch aktuierbares Formschlusselement vorgeschlagen, welches mit einem wellenseitigen Komplement innerhalb eines Formschlussbereichs zumindest abschnittsweise formschlüssig fügbar ist, um die Welle zu sperren, und welches in einem Zustand, stirnseitig am wellenseitigen Komplement anliegend, längs zur Welle mittels zumindest eines elastischen Kraftübertragungsmittels gegen das wellenseitige Komplement einrastbar vorspannbar ist.

Das mindestens eine elastische Kraftübertragungsmittel ist dabei vorteilhafterweise in das Formschlusselement integriert. D.h., dass das mindestens eine elastische Kraftübertragungsmittel einstückig bzw. einteilig mit dem Formschlusselement ausgebildet bzw. ausgeführt ist.

Dabei ist das Formschlusselement in einem Sperrzustand der Welle, in welchem das Formschlusselement und das wellenseitige Komplement im Formschlussbereich des Sperrmechanismus ineinandergreifen, gegen einen Gehäuseabschnitt einer Elektromotor-Antriebseinheit abstützbar, an welchem der Sperraktuator anbringbar ist.

Der Sperrmechanismus weist dabei im Formschlussbereich und in Umfangsrichtung der Welle ein Bewegungsspiel zwischen dem Formschlusselement und dem wellenseitigen Komplement auf, welches in Verbindung mit der besagten bzw. zuvor genannten Vorspannung des Formschlusselements gegen das wellenseitige Komplement eine Einrastung des Formschlusselements in das wellenseitige Komplement bzw. eine Fügung des Formschlusselements mit dem wellenseitigen Komplement ermöglicht.

Der Sperraktuator weist einen elektrischen Antrieb mit einem Stator auf, der einen dazu innenliegenden Rotor mit Permanentmagneten antreibt, wobei der Rotor über eine Rotorwelle mit dem Formschlusselement verbunden ist, wobei die Rotorwelle an ihrem der Welle abgewandten Ende durch ein Lager und an ihrem der Welle zugewandten Ende durch einen Schraubentrieb aufgenommen ist.

Dabei ist die Rotorwelle mit einem Gewindespindelabschnitt versehen, welcher mit einem Nabenabschnitt des Formschlusselements den Schraubentrieb bildet, wobei der Nabenabschnitt als Gewindemutter des Schraubentriebs ausgeführt ist. Diese Gewindemutter ist demnach ebenfalls in das Formschlusselement 8 integriert.

Dabei ist das Formschlusselement - je nach Drehrichtung der Rotorwelle - in der Längsrichtung entlang der Gewindespindel, mit welcher der Nabenabschnitt zusammenwirkt, relativ zum Ende der Welle verfahrbar.

Dabei ist das Formschlusselement über das zumindest eine elastische Kraftübertragungsmittel an den die Axial-Hubbewegung bewirkenden Bewegungsmechanismus des Sperraktuators angebunden.

Unter einem wellenseitigen Komplement ist dabei ein wellenseitiges Gegenstück zum Formschlusselement zu verstehen, welches im Formschlussbereich entsprechend komplementär zum Formschlusselement ausgebildet bzw. ausgeformt ist. Dabei kann es sich um einen entsprechend ausgeformten Abschnitt der Welle selbst oder eines mit der Welle gefügten, separaten und entsprechend ausgeformten Elements handeln, welcher mit dem Formschlusselement formschlüssig zusammenwirkt.

Unter einem elastischen Kraftübertragungsmittel ist dabei ein mechanischer Energiespeicher zur elastischen Vorspannung des Formschlusselements gegen das wellenseitige Komplement zu verstehen, und zwar in Gestalt zumindest eines in das Formschlusselement integrierten Federelementabschnitts.

Dieser Energiespeicher spannt das Formschlusselement gegen das wellenseitige Komplement vor, bis die Welle relativ zum Formschlusselement eine geeignete Ausrichtung für einen Formschluss einnimmt bzw. erfährt. Sobald eine solche Ausrichtung vorliegt, drückt dieser Energiespeicher das Formschlusselement zur Einrastung in das wellenseitige Komplement, so dass die Welle gesperrt bzw. blockiert wird.

Der vorgeschlagene Sperrmechanismus ermöglicht eine kompakte, bauraumsparende sowie kostengünstige Ausführung innerhalb eines Antriebsstrangs, insbesondere eines Fahrzeugs.

Zudem ist der vorgeschlagene Sperrmechanismus energiesparend umsetzbar, denn es bedarf für die besagte Vorspannung keiner aufzubringenden hohen Stellkräfte seitens des Aktuators. Bei der Fügung des Formschlusselements mit dem wellenseitigen Komplement wird nämlich nur das Formschlusselement und nicht auch noch das zu sperrende Element eines Antriebsstrangs bewegt.

**In** einer Ausführung ist das wellenseitige Komplement im Bereich eines Endes der Welle angeordnet. Dabei kann der Sperraktuator an dem Ende der Welle und dabei gegenüber liegend am Gehäuseabschnitt angebracht sein.

**In** einer weiteren Ausführung ist das Formschlusselement zudem koaxial zur Welle angeordnet. Dies ermöglicht eine besonders kompakte Ausführung einer einen solchen Sperrmechanismus aufweisenden Elektromotor-Antriebseinheit, insbesondere eines Fahrzeugs.

Das Formschlusselement kann dabei in Gestalt eines geschlossen umlaufenden, ringförmigen Elements ausgeformt sein, welches vorteilhafterweise koaxial zur sperrbaren Welle angeordnet sein kann.

Das Formschlusselement weist dabei eine Innenprofilierung auf, welche im Formschlussbereich mit einer zur Innenprofilierung komplementären Profilierung des wellenseitigen Komplements formschlüssig zusammenwirkt.

Ferner weist das Formschlusselement eine Außenprofilierung auf, welche komplementär zu einem Führungsabschnitt ausgeformt ist. Bei diesem Führungsabschnitt kann es sich um einen Abschnitt des Sperraktuators selbst handeln, welcher am Gehäuseabschnitt angebracht bzw. anbringbar bzw. befestigt bzw. befestigbar ist. Alternativ dazu kann der Führungsabschnitt am Gehäuseabschnitt selbst ausgeformt bzw. in diesen integriert bzw. integrierbar sein. Durch diesen Führungsabschnitt ist das Formschlusselement für die Axial-Hubbewegung zur Welle längsgeführt. Somit ist das Formschlusselement - je nach Umsetzung dieses Führungsabschnitts - mittelbar oder unmittelbar am besagten Gehäuseabschnitt abstützbar.

In einer weiteren Ausführung ist das Formschlusselement gegen einen Gehäuseabschnitt eines Elektromotorgehäuses oder eines (Reduktions-)Getriebegehäuses abstützbar. Der Sperrmechanismus ist dabei vorteilhafterweise in das Elektromotorgehäuse oder (Reduktions-)Getriebegehäuse integrierbar.

In einer Ausführung fungiert dieser Schraubentrieb zugleich vorteilhafterweise im Sinne einer Lagerstelle, welche der sperrbaren Welle zugewandt ist und eine Rotorwelle eines Elektromotors wellenseitig aufnimmt. Dabei ist die Mutter bzw. Gewindemutter des Schraubentriebs auch in das Formschlusselement integriert, und zwar in Gestalt eines Nabenabschnitts des Formschlusselements. Diese Funktionsintegration begünstigt dabei zusätzlich eine Miniaturisierung des Sperraktuators und somit des Sperrmechanismus.

Es wird ferner eine Elektromotor-Antriebseinheit mit einem Sperrmechanismus der zuvor beschriebenen Art vorgeschlagen (Anspruch 9).

Zudem wird ein Fahrzeug mit einer solchen Elektromotor-Antriebseinheit oder einem Sperrmechanismus der zuvor beschriebenen Art vorgeschlagen (Anspruch 10).

Unter einem Fahrzeug ist dabei jede Art von Fahrzeug bzw. Kraftfahrzeug zu verstehen, welches elektromotorisch betrieben wird, insbesondere aber Personenkraftwagen und/oder Nutzfahrzeuge. Dabei handelt es sich vorzugsweise um teilautonom und insbesondere um vollautonom betriebene Fahrzeuge.

Es wird ferner ein Verfahren zum Sperren einer Welle eines Antriebsstrangs, insbesondere eines Fahrzeugs, mit einem Sperrmechanismus der vorhergehend beschriebenen Art vorgeschlagen (Anspruch 11).

Bei diesem Verfahren wird das Formschlusselement mit dem wellenseitigen Komplement unter Ausnutzung des Bewegungsspiels und bis zu einer vom Bewegungsspiel abhängigen Höchstdrehgeschwindigkeit der Welle zur Einrastung gebracht, indem das Formschlusselement in einem Zustand, stirnseitig am wellenseitigen Komplement anliegend, längs zur Welle über das mindestens eine elastische Kraftübertragungsmittel mit einer Kraft gegen das wellenseitige Komplement und bis zur Einrastung vorgespannt wird.

In einer Ausführung wird eine Welle des aus einem Stillstand anrollenden Fahrzeugs bis zu einer vom Bewegungsspiel abhängigen Höchstgeschwindigkeit des Fahrzeugs gesperrt.

Zur Vorspannung bedarf es dabei nur einer relativ geringen Kraftaufbringung seitens des Sperraktuators. Die aufgebrachte Vorspannkraft muss dabei nur so groß sein, dass sie das Formschlusselement - unter Ausnutzung des besagten Bewegungsspiels - in einer von einer Drehgeschwindigkeit der Welle bzw. Fahrzeuggeschwindigkeit abhängigen, zur Verfügung stehenden Zeit mit dem wellenseitigen Komplement zum Formschluss bringt.

Dabei wird auch nur das Formschlusselement des Sperraktuators und nicht auch noch die zu sperrende Welle des Antriebsstrangs bewegt.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen, teilweise schematisch:
- Fig. 1: einen vorgeschlagenen Sperrmechanismus in einer ebenen Schnittdarstellung;
- Fig. 2: einen Formschlussbereich des vorgeschlagenen Sperrmechanismus; und
- Fig. 3: eine Elektromotor-Antriebseinheit eines Antriebsstrangs.

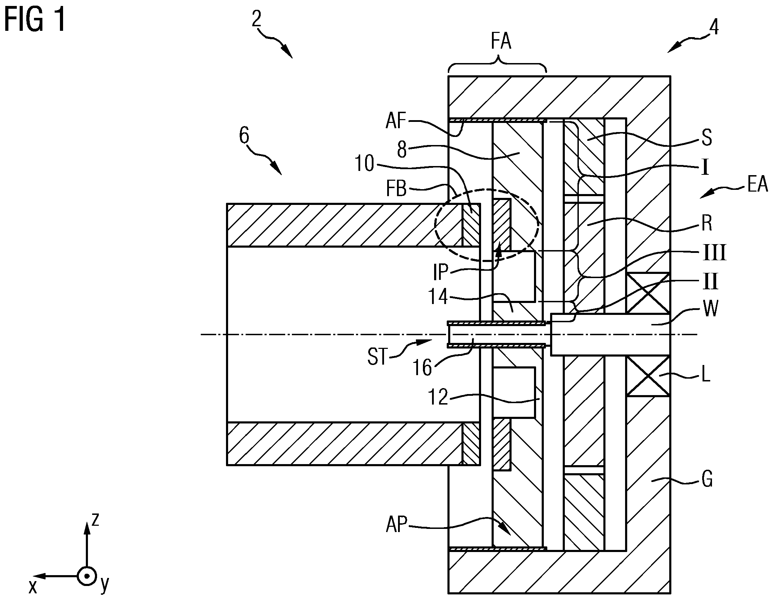

Fig. 1 veranschaulicht einen Sperrmechanismus 2, bei welchem ein Sperraktuator 4 mit einer sperrbaren Welle 6, etwa in Gestalt einer Hohlwelle eines Antriebsstrangs zusammenwirkt.

Der Sperraktuator 4 umfasst dabei ein Formschlusselement 8, welches in einer Axial-Hubbewegung in der Längsrichtung X - X und längs zur Welle 6 elektrisch aktuierbar ist.

Fig. 1 zeigt dabei dieses Formschlusselement 8 in einem Zustand, in welchem es nicht mit der Welle 6 gefügt ist. Die Welle 6 ist daher nicht gesperrt veranschaulicht.

In einem gesperrten Zustand bzw. Sperrzustand der Welle 6 sind das Formschlusselement 8 und die Welle 6 in einem Formschlussbereich FB miteinander wirkverbunden bzw. greifen in diesem Formschlussbereich FB abschnittsweise formschlüssig ineinander, so dass die Welle 6 gesperrt ist.

Das Formschlusselement 8 ist dabei in Gestalt eines zumindest abschnittsweise geschlossen umlaufenden Elements ausgeformt, welches stirnseitig über eine Innenprofilierung IP mit einem wellenseitigen Komplement formschlüssig zusammenwirkt.

Diese Innenprofilierung IP wird dabei durch eine ringförmige Anordnung von in Umfangsrichtung des Formschlusselements 8 in gleichmäßigen Abständen zueinander verteilten, axial, nach außen und innen vorspringenden, der Welle 6 zugewandten, steg- bzw. zahn- bzw. klauenartigen Formschlusselementen gebildet, welche eine Art Innenprofilierung IP des Formschlusselements 8 bilden und welche im Formschlussbereich FB mit dem wellenseitigen Komplement in Formschluss bringbar sind.

Das wellenseitige Komplement ist in einem Bereich des dem Sperraktuator 4 zugewandten Endes der Welle 6 in bzw. an der Welle 6 selbst ausgeformt, und zwar in Gestalt einer komplementär zur Innenprofilierung IP ausgeformten Wellenaußenprofilierung 10.

Das Formschlusselement 8 und die Welle 6 greifen dabei ähnlich einer Stirnradverzahnung formschlüssig ineinander.

In seiner radialen Erstreckung bzw. in Querrichtung Y - Y bzw. Z - Z unterteilt sich das Formschlusselement 8 in drei Abschnitte, und zwar in einen ersten, äußeren Abschnitt I, welcher die besagte Innenprofilierung IP stirnseitig und zur Welle 6 hin aufweist, einen zweiten, inneren Abschnitt II in Gestalt eines Nabenabschnitts 14 bzw. nabenartigen Abschnitts 14 sowie einen dritten Abschnitt III in Gestalt eines in der Längsrichtung X - X der Welle 6 wirkenden, axial-elastischen Federelementabschnitts 12, welcher im Sinne eines mechanisch elastischen Energiespeichers fungiert und welcher zwischen dem ersten Abschnitt I und zweiten Abschnitt II ausgeformt ist. Dieser dritte Abschnitt III kann dabei bspw. in Umfangsrichtung des Formschlusselements 8 durchgehend umlaufend bzw. geschlossen umlaufend ausgeformt sein. Alternativ dazu kann dieser dritte Abschnitt III eine Vielzahl von in Umfangsrichtung des Formschlusselements 8 zueinander gleichmäßig beabstandeten, stegartigen Abschnitten aufweisen, über welche sich eine adäquate axial-elastische Wirkung dieses Abschnitts III umsetzen bzw. verwirklichen lässt.

Für die Axial-Hubbewegung in der Längsrichtung X - X ist das Formschlusselement 8 mittels einer Axialführung AF innerhalb eines Führungsabschnitts FA geführt.

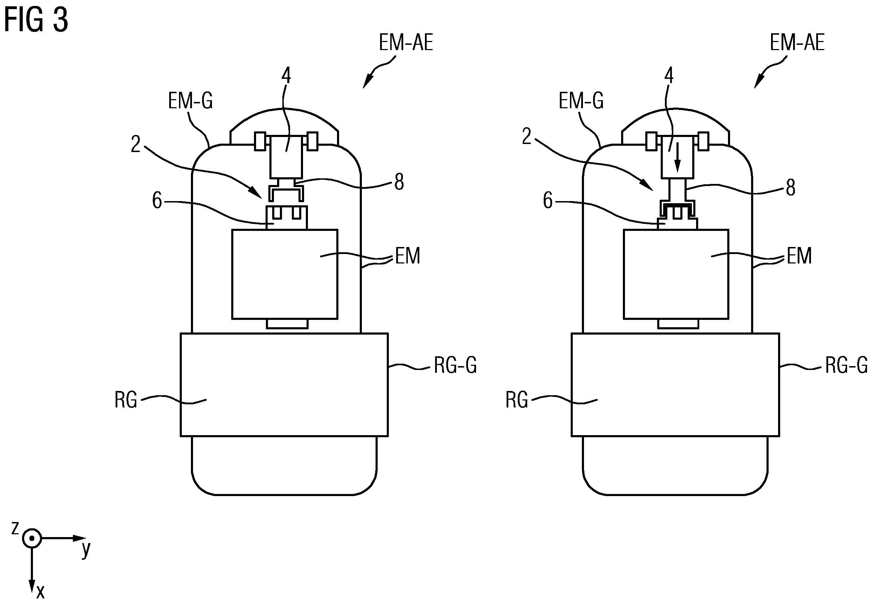

In einer Ausführung ist dieser Führungsabschnitt FA in den Sperraktuator 4 integriert bzw. als ein Abschnitt des Sperraktuators 4 ausgeführt und als solcher bspw. an einem Gehäuseabschnitt EM-G eines Elektromotors EM einer Elektromotor-Antriebseinheit EM-AE angebracht (siehe Fig. 3). Über diesen Führungsabschnitt FA stützt sich das Formschlusselement 8 im Sperrzustand der Welle 6 gegen den Gehäuseabschnitt EM-G des Elektromotors EM ab. Im Sperrzustand der Welle 6 werden somit sowohl statische als auch dynamische Drehmomentlasten des Antriebsstrangs über diesen Führungsabschnitt FA in den Gehäuseabschnitt bzw. das Gehäuse EM-G des Elektromotors EM eingeleitet.

In einer Ausführung ist das Formschlusselement 8 über bspw. drei und dabei gleichmäßig zueinander beabstandete und an seinem Außenumfang an- bzw. ausgeformte, radiale, nach außen vorspringende, klauenartige Formschlusselemente im dazu korrespondierend bzw. komplementär an- bzw. ausgeformten Führungsabschnitt FA längs zur Welle 6 bzw. in deren Längsrichtung X - X geführt.

Diese klauenartigen Formschlusselemente bilden dabei eine Außenprofilierung des Formschlusselements 8.

Fig. 3 veranschaulicht eine solche Elektromotor-Antriebseinheit EM-AE eines Antriebsstrangs, insbesondere eines Fahrzeugs, welche den Elektromotor EM, ein Reduktionsgetriebe RG sowie den vorgeschlagenen Sperrmechanismus 2 aufweist.

Dabei ist der Sperraktuator 4 dem Ende der Welle 6 gegenüber liegend sowie koaxial zur ihr angeordnet und dabei am Gehäuseabschnitt EM-G des Elektromotors EM angebracht (siehe auch Fig. 1). Der vorgeschlagene Sperrmechanismus 2 ist somit vorteilhafterweise in den Elektromotor EM integriert. Der Sperraktuator 4 ist dabei in das Elektromotorgehäuse EM-G integriert. Bezüglich des zuvor genannten Fahrzeugs veranschaulicht die Fig. 3 somit eine in den Elektromotor EM integrierte Parksperre.

Über den axial-elastischen Federelementabschnitt 12 (mechanischer Energiespeicher), welcher- wie zuvor bereits ausgeführt ist - durch ein Element oder mehrere Elemente des besagten dritten Abschnitts III des Formschlusselements 8 gebildet sein kann, ist das Formschlusselement 8 an einen elektrischen Antrieb EA des Sperraktuators 4 und - in der Längsrichtung X - X elastisch angebunden.

Dieser Federelementabschnitt 12 (Abschnitt III) ist dabei integraler Bestandteil des Formschlusselements 8. Dieser Federelementabschnitt 12 (Abschnitt III) kann dabei ferner an den ersten Abschnitt I und zweiten Abschnitt II des Formschlusselements 8 angespritzt und somit stoffschlüssig an den ersten Abschnitt I und zweiten Abschnitt II des Formschlusselements 8 angebunden sein.

In einer alternativen Ausführung ist das ganze Formschlusselement 8 nebst dem Federelementabschnitt 12 aus einem Kunststoff ausgeformt bzw. aus einem solchen kunststofftechnisch gespritzt ausgebildet.

Diese Funktionsintegration begünstigt vorteilhafterweise eine Miniaturisierung des Sperraktuators 4 und somit des Sperrmechanismus 2.

Der elektrische Antrieb EA des Sperraktuators 4 weist einen Stator S auf, der einen dazu innenliegenden Rotor R mit Permanentmagneten antreibt. Über eine Rotorwelle W ist der Rotor R gehäuseseitig bzw. am der Welle 6 abgewandten Ende der Rotorwelle W in einem konventionellen Lager L, etwa in Gestalt eines Wälzlagers aufgenommen.

Wellenseitig bzw. am der Welle 6 zugewandten Ende der Rotorwelle W hingegen ist die Rotorwelle W mit einer Gewindespindel 16 verbunden bzw. mit einem Gewindespindelabschnitt 16 versehen, welche / welcher in Verbindung mit dem besagten Nabenabschnitt 14 des Formschlusselements 8 einen Schraubentrieb ST bildet. Der Nabenabschnitt 14 ist dabei als Mutter bzw. Gewindemutter des Schraubentriebs ST ausgeführt. Diese Mutter ist demnach ebenfalls in das Formschlusselement 8 integriert bzw. integraler Bestandteil des Formschlusselements 8.

Auch diese Funktionsintegration trägt vorteilhafterweise zur besagten Miniaturisierung des Sperraktuators 4 und somit des Sperrmechanismus 2 bei.

Wellenseitig bzw. am der Welle 6 zugewandten Ende der Rotorwelle W ist kein konventionelles Lager zur Aufnehme der Rotorwelle W vorgesehen. Vielmehr ist die Rotorwelle W wellenseitig durch den Schraubentrieb ST aufgenommen bzw. gelagert. Dieser Entfall eines konventionellen Lagers trägt ebenfalls zur Miniaturisierung des Sperraktuators 4 und somit des Sperrmechanismus 2 bei.

Das Formschlusselement 8 ist demnach je nach Drehrichtung der Rotorwelle W bzw. der mit ihr verbundenen Gewindespindel 16 (links- oder rechtsdrehend) in der Längsrichtung X - X entlang der Gewindespindel 16, mit welcher der Nabenabschnitt 14 zusammenwirkt, relativ zum Wellenende verfahrbar. Dieser Schraubentrieb ST wandelt eine Rotationsbewegung des Rotors R in eine Axialbewegung (bzw. Translationsbewegung) des Formschlusselements 8 in der Längsrichtung X - X um.

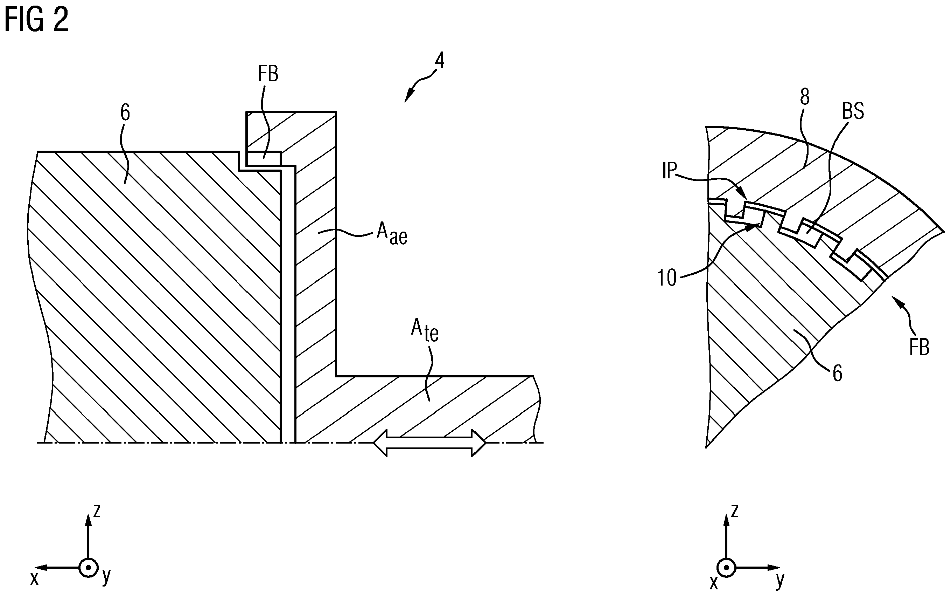

Fig. 2 veranschaulicht rein schematisch die Wirkverbindung zwischen dem Sperraktuator 4 und der Welle 6. Der Sperraktuator 4 weist dabei einen in der Längsrichtung X - X axial-elastischen Abschnitt Aₐₑ und einen torsionselastischen bzw. torsionsweichen Abschnitt Aₜₑ auf.

In Bezug auf die Fig. 1 ist dieser axial-elastische Abschnitt Aₐₑ durch den Federelementabschnitt 12 (bzw. Energiespeicher) umgesetzt bzw. verwirklicht, wohingegen der torsionselastische bzw. torsionsweiche Abschnitt Aₜₑ durch den Nabenabschnitt 14 umgesetzt bzw. verwirklicht ist.

Über diesen axial-elastischen Energiespeicher 12 lassen sich axiale Stoßbelastungen bzw. Stöße in der Längsrichtung X - X im Zusammenhang mit dem Fügevorgang reduzieren.

Dynamische - und auslegungsrelevante - Drehmomentlasten in Gestalt von Drehmomentspitzen eines Antriebsstrangs äußern sich in Bezug auf den Sperrmechanismus 2 in Gestalt von Stoßbelastungen in der Querrichtung Y - Y bzw. Z - Z, welche auf den Sperraktuator 4 bzw. dessen Formschlusselement 8 einwirken.

Unter einer dynamischen Drehmomentlast ist dabei eine kurzfristige Drehmomentlast zu verstehen, die entstehen kann, indem z.B. ein Fahrzeug gegen ein geparktes Fahrzeug anstößt. Bei solch einem Ereignis erzeugt eine extern auf das Fahrzeug einwirkende Kraft ein solch kurzfristiges, dynamisches Drehmoment im Antriebsstrang des Kraftfahrzeugs. Es wird an dieser Stelle bspw. auch auf eine auslegungsrelevante dynamische Drehmomentlast in einem Fehlerfall verwiesen, welcher im Folgenden noch beschrieben wird.

Über einen torsionsweichen Nabenabschnitt 14 lassen sich diese Stoßbelastungen auf das Formschlusselement 8 in der Querrichtung Y - Y bzw. Z - Z vorteilhafterweise reduzieren. Eine torsionsweiche Auslegung begünstigt somit zusätzlich die besagte Miniaturisierung des Sperraktuators 4 und somit des Sperrmechanismus 2.

Fig. 2 veranschaulicht ferner den Formschlussbereich FB zwischen dem Formschlusselement 8 und der Welle 6 sowie ein diesem Formschlussbereich FB zugrundeliegendes Bewegungsspiel BS zwischen der Innenprofilierung IP des Formschlusselements 8 und der wellenseitigen Profilierung bzw. Wellenaußenprofilierung 10, und zwar in Umfangsrichtung der Welle 6.

Dieses Bewegungsspiel BS ermöglicht eine Sperrung der Welle 6 durch das Formschlusselement 8, sobald die Welle 6 eine entsprechende Ausrichtung zum Formschlusselement 8 erfährt, welcher es für einen Formschluss bzw. eine Fügung der Fügeelemente 6, 8 bedarf.

Im Zusammenhang mit dem zuvor genannten Fahrzeug bedeutet dies, dass das Fahrzeug in einer Parksituation, in welcher das Fahrzeug stillsteht, etwa auf einen Fahrerwunsch hin, gesperrt bzw. blockiert werden kann.

Sofern in dieser Parksituation die Ausrichtung der Welle 6 nicht derart ist, als dass sie die Sperrung durch das Formschlusselement 8 ermöglicht, kann das Formschlusselement 8 in einem Zustand, in welchem es stirnseitig an der Welle 6 anliegt, längs zur Welle 6 über diesen Federelementabschnitt 12 mit einer definierbaren Kraft gegen die Welle 6 zur Einrastung vorgespannt werden. Wird die Welle 6 daraufhin nur etwas weiter verdreht bzw. gedreht, so kommt es zur Einrastung des Formschlusselements 8 mit der Welle 6, sobald eine Ausrichtung der Welle 6 erreicht wird, welche die Einrastung ermöglicht. Eine solche Weiter(ver)drehung der Welle 6 in der Parksituation kann dabei fahrzeugsystemseitig veranlasst werden.

Das Bewegungsspiel BS ermöglicht aber auch folgendes Notfall-Szenario in einem Fehlerfall, in welchem der Elektromotor EM der Elektromotor-Antriebseinheit EM-AE ausfällt.

Kommt es beim zuvor genannten Fahrzeug während des Fahrens zu einem Ausfall des Elektromotors EM der Elektromotor-Antriebseinheit EM-AE und wird das Fahrzeug daraufhin auf einer Straße mit einer Steigung bis zum Stillstand abgebremst, dann ermöglicht der zuvor beschriebene Sperrmechanismus 2 eine Sperrung bzw. Blockade des daraufhin aus dem Stillstand anrollenden Fahrzeugs, und zwar bis zu einer vom Bewegungsspiel BS abhängigen Höchstdrehgeschwindigkeit der Welle 6 bzw. Höchstgeschwindigkeit des Fahrzeugs.

Dabei wird das Formschlusselement 8 mit der Welle 6 unter Ausnutzung des Bewegungsspiels BS und bis zur vom Bewegungsspiel BS abhängigen Höchstdrehgeschwindigkeit der Welle 6 bzw. Höchstgeschwindigkeit des Fahrzeugs zur Einrastung gebracht, indem das Formschlusselement 8 in einem Zustand, stirnseitig an der Welle 6 anliegend, längs zur Welle 6 über diesen Federelementabschnitt 12 mit einer definierbaren Kraft gegen die Welle 6 und bis zur Einrastung vorgespannt wird. Die Einrastung erfolgt schließlich, sobald die Welle 6 eine entsprechende Ausrichtung zum Formschlusselement 8 erfährt.

Obwohl in der vorhergehenden Beschreibung exemplarische Ausführungen erläutert werden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

## Patentansprüche

1. Sperrmechanismus (2), insbesondere für ein Fahrzeug, welcher einen Sperraktuator (4) und eine sperrbare Welle (6) eines Antriebsstrangs aufweist und zwischen dem Sperraktuator (4) und der sperrbaren Welle (6) angeordnet ist und bei welchem ein in einer Axial-Hubbewegung (X - X) und längs zur Welle (6) elektrisch aktuierbares Formschlusselement (8) in einem Zustand, stirnseitig an einem wellenseitigen Komplement (10) anliegend, mit welchem das Formschlusselement (8) abschnittsweise formschlüssig fügbar ist, längs zur Welle (6) mittels zumindest eines elastischen Kraftübertragungsmittels (12) gegen das wellenseitige Komplement (10) einrastbar vorspannbar ist,
wobei das Formschlusselement (8) in einem Sperrzustand der Welle (6), in welchem das Formschlusselement (8) und das wellenseitige Komplement (10) in einem Formschlussbereich (FB) des Sperrmechanismus (2) ineinandergreifen, gegen einen Gehäuseabschnitt (EM-G) einer Elektromotor-Antriebseinheit (EM-AE) abstützbar ist, an welchem der Sperraktuator (4) anbringbar ist,
wobei der Sperrmechanismus (2) im Formschlussbereich (FB) und in Umfangsrichtung der Welle (6) ein Bewegungsspiel (BS) zwischen dem Formschlusselement (8) und dem wellenseitigen Komplement (10) aufweist, **dadurch gekennzeichnet, dass**
das elastische Kraftübertragungsmittel (12) in das Formschlusselement (8) integriert und dabei einteilig mit dem Formschlusselement (8) ausgebildet ist und dass der Sperraktuator (4) einen elektrischen Antrieb (EA) mit einem Stator (S) aufweist, der einen dazu innenliegenden Rotor (R) mit Permanentmagneten antreibt, wobei der Rotor (R) über eine Rotorwelle (W) mit dem Formschlusselement (8) verbunden ist, wobei die Rotorwelle (W) an ihrem der Welle (6) abgewandten Ende durch ein Lager (L) aufgenommen ist und an ihrem der Welle (6) zugewandten Ende mit einem Gewindespindelabschnitt (16) versehen ist, welcher mit einem Nabenabschnitt (14) des Formschlusselements (8) einen Schraubentrieb (ST) bildet, wobei der Nabenabschnitt (14) als Gewindemutter des Schraubentriebs (ST) ausgeführt ist, und wobei die Gewindemutter in das Formschlusselement (8) integriert ist,
wobei das Formschlusselement (8) je nach Drehrichtung der Rotorwelle (W) in der Längsrichtung (X - X) entlang der Gewindespindel (16), mit welcher der Nabenabschnitt (14) zusammenwirkt, relativ zum Ende der Welle (6) verfahrbar ist.
wobei das Formschlusselement (8) über das zumindest eine elastische Kraftübertragungsmittel (12) an den die Axial-Hubbewegung (X - X) bewirkenden Bewegungsmechanismus des Sperraktuators (4) angebunden ist.

2. Sperrmechanismus (2) nach Anspruch 1, wobei das wellenseitige Komplement (10) im Bereich eines Endes der Welle (6) angeordnet ist.

3. Sperrmechanismus (2) nach Anspruch 2, wobei der Sperraktuator (4) an dem Ende der Welle (6) und dabei gegenüber liegend am Gehäuseabschnitt (EM-G) anbringbar ist.

4. Sperrmechanismus (2) nach Anspruch 3, wobei das Formschlusselement (8) koaxial zur Welle (6) angeordnet ist.

5. Sperrmechanismus (2) nach einem der vorhergehenden Ansprüche, wobei das Formschlusselement (8) in Gestalt eines geschlossen umlaufenden, ringförmigen Elements ausgeformt ist.

6. Sperrmechanismus (2) nach einem der vorhergehenden Ansprüche, wobei das Formschlusselement (8) eine Innenprofilierung (IP) aufweist, welche im Formschlussbereich (FB) mit einer komplementären Profilierung (10) des wellenseitigen Komplements formschlüssig zusammenwirkt.

7. Sperrmechanismus (2) nach einem der vorhergehenden Ansprüche, wobei das Formschlusselement (8) eine Außenprofilierung (AP), komplementär zu einem Führungsabschnitt (FA) des Sperraktuators (4) oder des Gehäuseabschnitts (EM-G), aufweist, über welchen das Formschlusselement (8) für die Axial-Hubbewegung (X - X) längsgeführt ist und über welchen das Formschlusselement (8) gegen den Gehäuseabschnitt (EM-G) mittelbar oder unmittelbar abstützbar ist.

8. Sperrmechanismus (2) nach einem der vorhergehenden Ansprüche, wobei das Formschlusselement (8) gegen einen Gehäuseabschnitt eines Elektromotorgehäuses (EM-G) oder eines (Reduktions-)Getriebegehäuses (RG-G) abstützbar ist.

9. Elektromotor-Antriebseinheit (EM-AE) mit einem Sperrmechanismus (2) nach einem der vorhergehenden Ansprüche.

10. Fahrzeug mit einer Elektromotor-Antriebseinheit (EM-AE) nach Anspruch 9 oder einem Sperrmechanismus (2) nach einem der Ansprüche 1 bis 8.

11. Verfahren zum Sperren einer Welle (6) eines Antriebsstrangs, insbesondere eines Fahrzeugs, mit einem Sperrmechanismus (2) nach einem der vorhergehenden Ansprüche 1 bis 8, bei welchem das Formschlusselement (8) mit dem wellenseitigen Komplement (10) unter Ausnutzung des Bewegungsspiels (BS) und bis zu einer vom Bewegungsspiel (BS) abhängigen Höchstdrehgeschwindigkeit der Welle (6) zur Einrastung gebracht wird, indem das Formschlusselement (8) in einem Zustand, stirnseitig am wellenseitigen Komplement (10) anliegend, längs zur Welle (6) über das mindestens eine elastische Kraftübertragungsmittel (12) mit einer definierbaren Kraft gegen das wellenseitige Komplement (10) und bis zur Einrastung vorgespannt wird.

12. Verfahren nach Anspruch 11, bei welchem eine Welle (6) des aus einem Stillstand anrollenden Fahrzeugs bis zu einer vom Bewegungsspiel (BS) abhängigen Höchstgeschwindigkeit des Fahrzeugs gesperrt wird.

## Claims

1. Blocking mechanism (2), in particular for a vehicle, which has a blocking actuator (4) and a blockable shaft (6) of a drivetrain and is arranged between the blocking actuator (4) and the blockable shaft (6), and in which a form-fitting element (8), which can be electrically actuated in an axial stroke movement (X - X) and longitudinally in relation to the shaft (6), can, in a state in which said form-fitting element bears against an end face of a shaft-mounted complement (10) to which the form-fitting element (8) can be partially form-fittingly coupled, be biased longitudinally in relation to the shaft (6) against the shaft-mounted complement (10) by means of at least one elastic force transmission means (12) so as to be able to enter a latching engagement,
wherein, in a blocked state of the shaft (6), in which the form-fitting element (8) and the shaft-mounted complement (10) engage in one another in a form-fitting region (FB) of the blocking mechanism (2), the form-fitting element (8) can be supported against a housing portion (EM-G) of an electric motor drive unit (EM-AE), on which the blocking actuator (4) can be mounted, wherein, in the form-fitting region (FB) and in the circumferential direction of the shaft (6), the blocking mechanism (2) has a movement clearance (BS) between the form-fitting element (8) and the shaft-mounted complement (10),
**characterized in that**
the elastic force transmission means (12) is integrated in the form-fitting element (8) and is formed in one piece with the form-fitting element (8), and **in that** the blocking actuator (4) has an electric drive (EA) with a stator (S), which uses permanent magnets to drive a rotor (R) situated inside the stator, wherein the rotor (R) is connected to the form-fitting element (8) via a rotor shaft (W), wherein the end of the rotor shaft (W) facing away from the shaft (6) is received by a bearing (L) and the end of the rotor shaft (W) facing the shaft (6) is provided with a threaded spindle portion (16), which together with a hub portion (14) of the form-fitting element (8) forms a screw drive (ST), wherein the hub portion (14) is in the form of a threaded nut of the screw drive (ST), and wherein the threaded nut is integrated in the form-fitting element (8), wherein, depending on the direction of rotation of the
rotor shaft (W), the form-fitting element (8) is movable in the longitudinal direction (X - X) along the threaded spindle (16), with which the hub portion (14) interacts, relative to the end of the shaft (6),
wherein the form-fitting element (8) is attached to the movement mechanism of the blocking actuator (4) via the at least one elastic force transmission means (12), which movement mechanism brings about the axial stroke movement (X - X).

2. Blocking mechanism (2) according to Claim 1, wherein the shaft-mounted complement (10) is arranged in the region of an end of the shaft (6).

3. Blocking mechanism (2) according to Claim 2, wherein the blocking actuator (4) can be mounted on the end of the shaft (6) and thus in a manner situated opposite the housing portion (EM-G).

4. Blocking mechanism (2) according to Claim 3, wherein the form-fitting element (8) is arranged coaxially with the shaft (6).

5. Blocking mechanism (2) according to one of the preceding claims, wherein the form-fitting element (8) is shaped in the form of an annular element that runs around in closed fashion.

6. Blocking mechanism (2) according to one of the preceding claims, wherein the form-fitting element (8) has an inner profiling (IP) which form-fittingly interacts with a complementary profiling (10) of the shaft-mounted complement in the form-fitting region (FB).

7. Blocking mechanism (2) according to one of the preceding claims, wherein the form-fitting element (8) has an outer profiling (AP) which is complementary to a guide portion (FA) of the blocking actuator (4) or of the housing portion (EM-G), via which guide portion the form-fitting element (8) is longitudinally guided for the axial stroke movement (X - X) and via which guide portion the form-fitting element (8) can be indirectly or directly supported against the housing portion (EM-G).

8. Blocking mechanism (2) according to one of the preceding claims, wherein the form-fitting element (8) can be supported against a housing portion of an electric motor housing (EM-G) or of a (reduction) gear housing (RG-G).

9. Electric motor drive unit (EM-AE) having a blocking mechanism (2) according to one of the preceding claims.

10. Vehicle having an electric motor drive unit (EM-AE) according to Claim 9 or a blocking mechanism (2) according to one of Claims 1 to 8.

11. Method for blocking a shaft (6) of a drivetrain, in particular of a vehicle, by means of a blocking mechanism (2) according to one of the preceding Claims 1 to 8, in the course of which method the form-fitting element (8) is brought into latching engagement with the shaft-mounted complement (10), utilizing the movement clearance (BS), up to a maximum rotational speed of the shaft (6) that depends on the movement clearance (BS), in that the form-fitting element (8), in a state in which it bears against an end face of the shaft-mounted complement (10), is biased longitudinally in relation to the shaft (6) and with a definable force against the shaft-mounted complement (10) via the at least one elastic force transmission means (12) until a latching engagement is obtained.

12. Method according to Claim 11, in the course of which, if the vehicle starts to move from a stationary position, a shaft (6) of the vehicle is blocked up to a maximum speed of the vehicle that depends on the movement clearance (BS).

## Revendications

1. Mécanisme de verrouillage (2), en particulier pour un véhicule, lequel possède un actionneur de verrouillage (4) et un arbre (6) verrouillable d'une chaîne cinématique et est disposé entre l'actionneur de verrouillage (4) et l'arbre (6) verrouillable, et avec lequel un élément à complémentarité de forme (8) pouvant être actionné électriquement en un mouvement alternatif axial (X - X) et longitudinalement par rapport à l'arbre (6) peut être précontraint de manière à pouvoir être enclenché, dans un état dans lequel il repose côté frontal contre un complément côté arbre (10), auquel l'élément à complémentarité de forme (8) peut être assemblé par complémentarité de forme par portions, longitudinalement par rapport à l'arbre (6) au moyen d'au moins un moyen de transmission de force (12) élastique contre le complément côté arbre (10),
l'élément à complémentarité de forme (8) pouvant être soutenu contre une portion de boîtier (EM-G) d'une unité d'entraînement à moteur électrique (EM-AE), sur laquelle l'actionneur de verrouillage (4) peut être installé, dans un état de verrouillage de l'arbre (6), dans lequel l'élément à complémentarité de forme (8) et le complément côté arbre (10) s'engrènent l'un dans l'autre dans une zone à complémentarité de forme (FB) du mécanisme de verrouillage (2),
le mécanisme de verrouillage (2) présentant, dans la zone à complémentarité de forme (FB) et dans la direction périphérique de l'arbre (6), un jeu de mouvement (BS) entre l'élément à complémentarité de forme (8) et le complément côté arbre (10),
**caractérisé en ce que**
le moyen de transmission de force (12) élastique est intégré dans l'élément à complémentarité de forme (8) et est ici réalisé d'un seul tenant avec l'élément à complémentarité de forme (8) et **en ce que** l'actionneur de verrouillage (4) possède un mécanisme d'entraînement électrique (EA) pourvu d'un stator (S), qui entraîne un rotor (R) muni d'aimants permanents situé à l'intérieur de celui-ci, le rotor (R) étant relié par le biais d'un arbre de rotor (W) à l'élément à complémentarité de forme (8), l'arbre de rotor (W) étant supporté par un palier (L) à son extrémité opposée à l'arbre (6) et étant muni d'une portion de tige filetée (16) à son extrémité faisant face à l'arbre (6), laquelle forme un entraînement à vis (ST) avec une portion de moyeu (14) de l'élément à complémentarité de forme (8), la portion du moyeu (14) étant réalisée sous la forme d'un écrou fileté de l'entraînement à vis (ST) et l'écrou fileté étant intégré dans l'élément à complémentarité de forme (8),
l'élément à complémentarité de forme (8) pouvant être déplacé par rapport à l'extrémité de l'arbre (6), en fonction du sens de rotation de l'arbre de rotor (W) dans le sens longitudinal (X - X) le long de la tige filetée (16) avec laquelle coopère la portion de moyeu (14), l'élément à complémentarité de forme (8) étant attaché au mécanisme de déplacement qui provoque le mouvement alternatif axial (X - X) de l'actionneur de verrouillage (4) par le biais de l'au moins un moyen de transmission de force (12) élastique.

2. Mécanisme de verrouillage (2) selon la revendication 1, le complément côté arbre (10) étant disposé dans la zone d'une extrémité de l'arbre (6).

3. Mécanisme de verrouillage (2) selon la revendication 2, l'actionneur de verrouillage (4) pouvant être installé à l'extrémité de l'arbre (6) et ainsi en vis-à-vis sur la portion de boîtier (EM-G).

4. Mécanisme de verrouillage (2) selon la revendication 3, l'élément à complémentarité de forme (8) étant disposé de manière coaxiale par rapport à l'arbre (6).

5. Mécanisme de verrouillage (2) selon l'une des revendications précédentes, l'élément à complémentarité de forme (8) étant façonné sous la forme d'un élément annulaire fermé en périphérie.

6. Mécanisme de verrouillage (2) selon l'une des revendications précédentes, l'élément à complémentarité de forme (8) possédant un profilage intérieur (IP), lequel coopère par complémentarité de forme dans la zone à complémentarité de forme (FB) avec un profilage (10) complémentaire du complément côté arbre.

7. Mécanisme de verrouillage (2) selon l'une des revendications précédentes, l'élément à complémentarité de forme (8) possédant un profilage extérieur (AP) complémentaire à une portion de guidage (FA) de l'actionneur de verrouillage (4) ou de la portion de boîtier (EM-G), par le biais duquel l'élément à complémentarité de forme (8) est guidé longitudinalement pour le mouvement alternatif axial (X - X) et par le biais duquel l'élément à complémentarité de forme (8) peut être soutenu indirectement ou directement contre la portion de boîtier (EM-G).

8. Mécanisme de verrouillage (2) selon l'une des revendications précédentes, l'élément à complémentarité de forme (8) pouvant être soutenu contre une portion de boîtier d'un boîtier de moteur électrique (EM-G) ou d'un carter d'engrenage (de réduction) (RG-G).

9. Unité d'entraînement à moteur électrique (EM-AE) comprenant un mécanisme de verrouillage (2) selon l'une des revendications précédentes.

10. Véhicule pourvu d'une unité d'entraînement à moteur électrique (EM-AE) selon la revendication 9 ou d'un mécanisme de verrouillage (2) selon l'une des revendications 1 à 8.

11. Procédé de verrouillage d'un arbre (6) d'une chaîne cinématique, en particulier d'un véhicule, avec un mécanisme de verrouillage (2) selon l'une des revendications précédentes 1 à 8, avec lequel l'élément à complémentarité de forme (8) est amené à s'enclencher avec le complément côté arbre (10) en utilisant le jeu de mouvement (BS) et jusqu'à une vitesse de rotation maximale de l'arbre (6) dépendante du jeu de mouvement (BS), en ce que l'élément à complémentarité de forme (8) est précontraint dans un état, reposant côté frontal contre le complément côté arbre (10), le long de l'arbre (6) par le biais de l'au moins un moyen de transmission de force (12) élastique avec une force pouvant être définie contre le complément côté arbre (10) et jusqu'à l'enclenchement.

12. Procédé selon la revendication 11, avec lequel un arbre (6) du véhicule qui commence à rouler à partir d'un état d'arrêt est verrouillé jusqu'à une vitesse maximale du véhicule dépendante du jeu de mouvement (BS).
